(19) Europäisches Patentamt

European Patent Office

Office européen des brevets

(11) **EP 1 161 726 B1**

(12) **EUROPEAN PATENT SPECIFICATION**

(45) Date of publication and mention
of the grant of the patent:
**17.09.2003 Bulletin 2003/38**

(51) Int Cl.[7]: **G06F 12/14**, G06F 1/00,
G06F 9/32

(21) Application number: **00900195.9**

(22) Date of filing: **11.01.2000**

(86) International application number:
**PCT/CA00/00021**

(87) International publication number:
**WO 00/042511 (20.07.2000 Gazette 2000/29)**

(54) **METHOD AND APPARATUS FOR MINIMIZING DIFFERENTIAL POWER ATTACKS ON PROCESSORS**

VERFAHREN UND VORRICHTUNG ZUR MINIMALISIERUNG DIFFERENTIELLER
STROMVERBRAUCHSANGRIFFE

PROCEDE ET APPAREIL PERMETTANT DE MINIMISER DES ATTAQUES MASSIVES DE TYPE
DIFFERENTIEL SUR DES PROCESSEURS

(84) Designated Contracting States:
**DE FR GB**

(30) Priority: **11.01.1999 CA 2258338**

(43) Date of publication of application:
**12.12.2001 Bulletin 2001/50**

(73) Proprietor: **Certicom Corp.**
**Mississauga, Ontario L4W 5L1 (CA)**

(72) Inventors:
• **PEZESHKI, Farhad**
**Toronto, Ontario M6E 1J7 (CA)**

• **LAMBERT, Robert, J.**
**Cambridge, Ontario N3C 3N3 (CA)**

(74) Representative: **Brophy, David et al**
**F.R. Kelly & Co.**
**27 Clyde Road**
**Ballsbridge**
**Dublin 4 (IE)**

(56) References cited:
**WO-A-98/00771**      **US-A- 4 519 036**
**US-A- 5 675 645**

Note: Within nine months from the publication of the mention of the grant of the European patent, any person may give
notice to the European Patent Office of opposition to the European patent granted. Notice of opposition shall be filed in
a written reasoned statement. It shall not be deemed to have been filed until the opposition fee has been paid. (Art.
99(1) European Patent Convention).

**Description**

This invention relates to cryptographic systems and in particular to a method and apparatus for minimizing successful power analysis attacks on processors.

BACKGROUND OF THE INVENTION

Cryptographic systems generally owe their security to the fact that a particular piece of information is kept secret, without which it is almost impossible to break the scheme. This secret information must generally be stored within a secure boundary, making it difficult for an attacker to get at it directly however, various schemes or attacks have been attempted in order-to obtain the secret information. Of particular risk are portable cryptographic tokens, including smart cards and the like. Of the more recent attacks performed on these particularly vulnerable devices are simple power analysis, differential power analysis, higher order differential power analysis and other related techniques. These technically sophisticated and extremely powerful analysis tools can be used by an attacker to extract secret keys from cryptographic devices. It has been shown that these attacks can be mounted quickly and can be implemented using readily available hardware. The amount of time required for these attacks depends on the type of attack and varies somewhat by device. For example it has been shown that a simple power attack (SPA) typically take a few seconds per card, while the differential power attacks (DPA) can take several hours.

Encryption operations are performed in a processor operating in a sequential manner by performing a sequence of fundamental operations, each of which generates a distinct timing pattern. Laborious but careful analysis of end-to-end power waveforms can decompose the order of these fundamental operations performed on each bit of a secret key and thus be, analyzed to find the entire secret key, compromising the system.

In the simple power analysis (SPA) attacks on smart cards and other secure tokens, an attacker directly measures the token's power consumption changes over time. The amount of power consumed varies depending on the executed microprocessor instructions. A large calculation such as elliptic curve (EC) additions in a loop and DES rounds, etc, may be identified, since the operations performed with a microprocessor vary significantly during different parts of these operations. By sampling the current and voltage at a higher rate, i. e., higher resolution, individual instructions can be differentiated.

The differential power analysis attack (DPA) is a more powerful attack than the SPA and is much more difficult to prevent. Primarily, the DPA uses statistical analysis and error correction techniques to extract information which may be correlated to secret keys, while the SPA attacks use primarily visual inspection to identify relevant power fluctuations. The DPA attack is performed in two steps. The first step is recording data that reflects the change in power consumed by the card during execution of cryptographic routines. In the second step, the collected data is statistically analyzed to extract information correlated to secret keys. A detailed analysis of these attacks is described in the paper entitled "Introduction to Differential Power Analysis and Related Attacks" by Paul Kocher et al.

Various techniques for addressing these power attacks have been attempted to date. These include hardware solutions such as providing well-filtered power supplies and physical shielding of processor elements. However, in the case of smart cards and other secure tokens, this is unfeasible. The DPA vulnerabilities result from transistor and circuit electrical behaviors that propagate to expose logic gates, microprocessor operation and ultimately the software implementations.

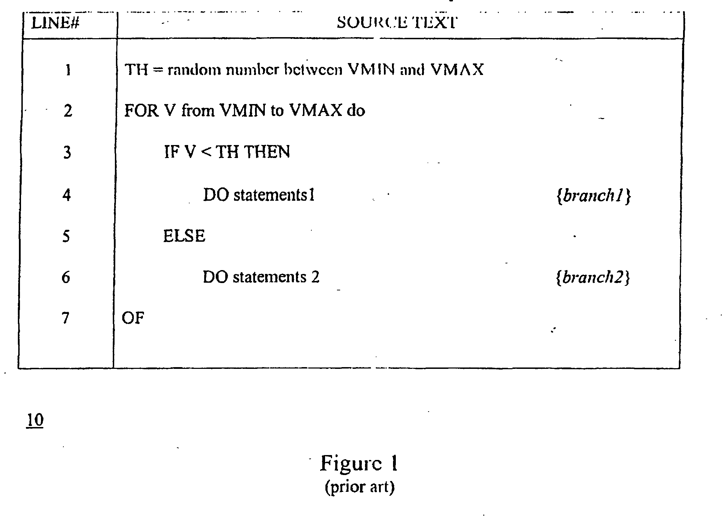

In software implementation of cryptographic routines, particularly on smart cards, branches in program flow are particularly vulnerable to power analysis measurements. Generally, where the program flow reaches a branch, then based on some distinguishing value V, one of two branches of the program is executed. To distinguish between the two possible cases, V is compared with a threshold value and a jump to one of two locations is executed as a result of the comparison. This is illustrated by referring to figure 1, where a flow diagram showing the implementation of a typical conditional jump according to the prior art is shown generally by 10. Generally a conditional jump implements an "IF *condition* THEN *statement1* ELSE *statement2* " clause. In this case, the flow diagram indicates a scenario where a distinguishing value V varies within a range and the *condition* is whether a threshold value TH is crossed by the distinguishing value V or not. The threshold TH is a random number between an upper limit and a lower limit VMAX and VMIN, respectively. Thus, it may be seen in figure 1 if V < TH the program executes *statements1* or if V > TH, the program executes *statements2*. This may be repeated for all values of V from VMIN to VMAX.

As outlined earlier by utilizing a simple power analysis technique, it is possible for an observer to distinguish whether the "IF" branches or the "ELSE" branch is being executed. This however, does assume that the *statements1* and *statements2* consist of two identical sets of instructions that serve different purposes. Power of current consumption measurements on some smart cards can reveal which branch was taken. In some cases, some status flags on the chip may be set or reset. These flags may also be used for SPA.

Methods have been proposed to protect executable code against copying.

US Patent No. 5,675, 645 teaches securing executable programs against copying. The method prevents unauthorized copying of software by replacing the branching targets with encrypted (or otherwise invalid) data, thereby requiring the presence of a mechanism at run-time to restore the original addresses. These programs are described by way of example as video game cartridges with game software stored in read-only memory.

WO 98 00771 teaches modifying software products so that they may be freely distributed while limiting their use to certain users. The method replaces the addresses in subroutine calls with invalid addresses and stores the valid locations externally for separate authorized retrieval.

US Patent No. 4,519,0336 teaches preventing users from copying software programs. The method modifies the addresses put on the busses and then corrects them before they are actually employed.

Accordingly, there is a need for a system for reducing the risk of a successful power analysis attacks and which is particularly applicable to current hardware environments.

## SUMMARY OF THE INVENTION

It is an object of this invention to provide a method for minimizing power analysis attacks on processors.

The invention is set out in the appended claims.

## BRIEF DESCRIPTION OF THE DRAWINGS

These and other features of the preferred embodiments of the invention will become more apparent in the following detailed description in which reference is made to the appended drawings wherein:

Figure 1 is schematic diagram of a conditional operation;
Figure 2 is part of a computer program according to an embodiment of the present invention;
Figure 3 is part of a computer program according to a further embodiment of the present invention;
Figure 4 is part of a computer program according to a still further embodiment of the present invention; and
Figure 5 is a flow diagram illustrating another embodiment of the invention.

## DETAILED DESCRIPTION OF THE PREFERRED EMBODIMENTS

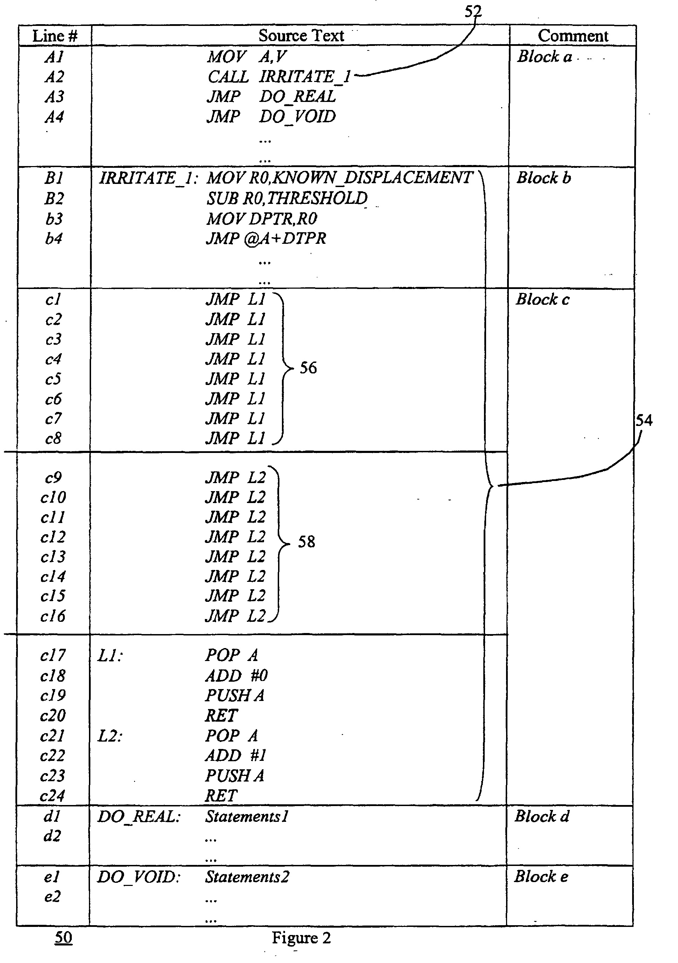

Referring to figure 2, a schematic diagram of a method for masking conditional jump statements in a computer program, according to an embodiment of the present invention, is shown generally by numeral 50. We assume that the following code fragments are executed by a processor and that a distinguishing value V varies within a known range and the *condition* is whether a threshold value TH is crossed by the distinguishing value V or not. The threshold TH is a random number in the known range having an upper limit and a lower limit VMAX and VMIN, respectively. In a generalized embodiment, the method comprises the steps of identifying a location for a conditional jump operation, and inserting at the location a call 52 to a subroutine 54, the subroutine 54 including instructions for changing the return address of the subroutine to one of two program branches to execute branch *statements1* or branch *statements2* in response to the result of a comparison of the distinguishing value V to the threshold value.

As may be seen in figure 2, the location of the conditional jump that is replaced is identified by code block a. The subroutine is identified as IRRITATE_1 (54) and includes code blocks identified as b, c, d and e. The code block c includes a first and second sections 56 and 58, respectively. The start address of the second section 58 is predetermined and is indicated by the value KNOWN_DISPLACEMENT. The start address of the first section 56 is then determined by the difference between KNOWN_DISPLACEMENT and the upper limit of the distinguishing value V. The first section 56 consists of a series of unconditional jumps to an address L1 and the second section 58 consists of a series of unconditional jumps to an address L2. The locations L1 and L2 contain code for returning program flow to execute *statements1* and *statements2* respectively. The code block b included in the subroutine IRRITATE_1 includes code for computing a difference between the KNOWN_DISPLACEMENT address and the THRESHOLD. The resulting address is then added to the distinguishing value V to derive a target address location in one of the sections 56 or 58.

As may be seen in block a the distinguishing value V is preserved while calling the subroutine, which in turn does not contain any conditional jumps. In this subroutine we change the return address of the subroutine (which resides on the stack) depending on whether V is below or above TH in such a way that, after returning from the subroutine, the program will continue execution in the desired branch.

An addressing mode known as extended addressing is used to determine the target address. With extended addressing the address at which the execution of the program has to continue is computed as the sum of the content of two registers. For example JMP @A+DPTR in the assembly language of the Intel 8051 family means that the address at which the program execution has to continue is computed by adding the content of the accumulator A and the data pointer DPTR. Other processors may support similar mechanisms for addressing. The code fragments shown in figure 2 illustrate the method. To refer to lines of these code fragments we use labels consisting of a letter and a number. Thus to implement this method we have to specify:

a) the address at which the block of code 56 is going to reside. That would be the address of the first JMP L1;

b) the range of the distinguishing value V; and

c) the maximum value of the random threshold TH. This maximum value or a value derived from it will define the size of the code block containing the JMP L1 and JMP L2 instructions.

The operation of the code fragments shown in figure 2 will be discussed below. The code fragments may be located within a loop, which sequentially changes the value of V in a given range for iterations of the loop. For example V may the value of the loop counter. The goal is to continue execution at the label DO_REAL, line d1, as long as V<THRESHOLD and continue execution of instructions at the label DO_VOID, line e1, for V>= THRESHOLD.

As mentioned earlier the THRESHOLD value is a random value within the known range of Vmin and Vmax. At line a1 the distinguishing value V is stored in the accumulator of the processor and the subroutine IRRITATE_1 is called at line a2. The return address from this subroutine will be line a3, which is automatically stored on the stack by the processor.

The KNOWN_DISPLACEMENT in line b1 is a constant value that specifies the beginning location of the second section 58 and indicates the address of line c9. Thus KNOWN_DISPLACEMENT-Vmax is the address of line c1, the beginning location of the first section 56.

In Block b the value of KNOWN_ DISPLACEMENT is stored in a register at line b1. Next at line b2 the register is updated with the difference of KNOWN_DISPLACEMENT and THRESHOLD. This difference is moved to DPTR at line b3. Thus, DPTR contains the address of one of the lines c1 through c8 in block c. For example for THRESHOLD = 3, DPTR would point to line c6. Assume next V and thus the contents of the accumulator can vary from 0 (Vmin) to 7 (Vmax). Then since DPTR may vary from the address of c1 to c8, the address @A+DPTR computed at line b4 can vary from the address of line c6 through c12 as V varies from 0 to 7. Therefore, for V<3 the JMP L1 instructions in the first section will be executed and for V>= 3 the JMP L2 instructions in the second section will be executed.

The labels L1 and L2 point to addresses located at lines c17 and c21 respectively. In lines c17 through c19 the return address of the subroutine IRRITATE_1 is retrieved and changed such that the program counter will point to line a3 after returning from the subroutine. In lines c21 through c23 the return address of the subroutine IRRITATE_1 is also retrieved and changed such that the program counter will point to line a4 after returning from the subroutine. The simple jump instructions at lines a3 and a4

It may be noted that the actual distinction between the two branches to be taken is decided at lines c18 and c22 where the retrieved subroutine return address is changed to the appropriate line in block a. In the present embodiment values of 0 and 1 have been chosen since the redirection jump instructions were located immediately after the call instruction to the subroutine IRRITATE_1, at lines a3 and a4 respectively. In other implementations different values with equal number of 1's in their binary presentation may be used so that an the difference in the add operations at lines c18 and c22 is indistinguishable to an attacker. In this case an appropriate number of NOP's would be added to code block a in order to adjust the return addresses.

Furthermore, the jump instructions in lines a3 and a4, which redirect program flow to *statements1* and *statements2* respectively, should be placed at addresses with the same number of 1's in their binary representation. This would result in homogenous power consumption on the address bus while addressing these two different locations. The same precaution applies to the lines d1 and e1, the beginning location of *statements1* and *statements2* respectively. In addition, in line b2 special attention should be paid to the choice of values of THRESHOLD and KNOWN_ DISPLACEMENT to avoid changes in flags in the processors status word while the SUB instruction is being executed.

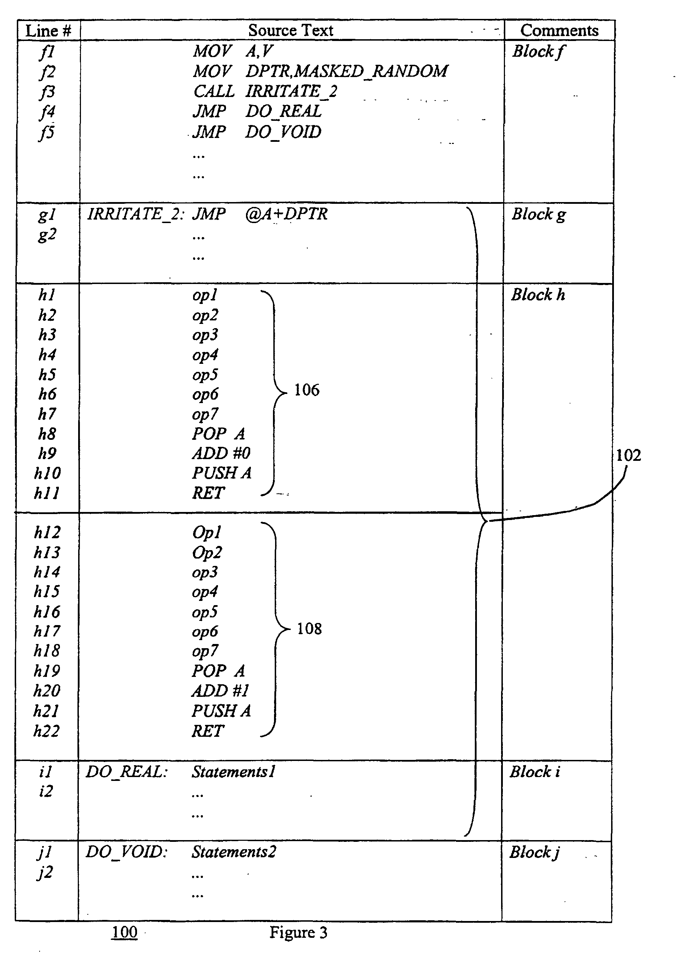

Referring to figure 3, a second embodiment of the present invention is shown generally by numeral 100. This embodiment also utilizes extended addressing as described earlier. Again, assembly language of the Intel 8051 family of processors is used to illustrate the method. For clarity the symbols op1 through op7 are used to represent program instructions. In this embodiment, the distinguishing value V is one of two distinct values Vmax and Vmin, rather than a range of values. Thus, the *condition* in this case is when the distinguishing value V is one or the other of the distinct values Vmax or Vmin. Once again a call to a subroutine is inserted at a conditional jump location, the subroutine including instructions for changing the return address of the subroutine to one of two program branches to execute branch *statements1* or branch *statements2* in response to the distinguishing value V being one of the two distinct values Vmax or Vmin.

As may be seen in figure 3, the location of the conditional jump that is replaced is identified by code block f. The subroutine is identified as IRRITATE_2 (102) and includes code blocks identified as blocks g and h. The code block h also includes first and second sections 106 and 108, respectively. Each of the sections contain a series of dummy operations op1 through op 7 indicated at lines h1 through h7 and at lines h12 through h18. Each of the sections is terminated by a sequence of instructions for retrieving the return address of the subroutine IRRITATE_2 and changing it such that the program counter will point to line f4 or f5 after returning from the subroutine. The lines f4 and f5 include jumps to one of the two branches indicated as block i and block j which contain *statements1* and *statements2* respectively.

The target destination address is comprised of two components, namely the distinguishing value V or a value derived from V and a random number MASKED_RANDOM, that are added at line g1. The beginning address of the first and second sections are chosen such that this target address is either in the range of lines h1 through h8 or h12 through h19. Since the second component of the target address is a random number, a random number of dummy operations will be executed before the return address of the subroutine IRRITATE_2 is computed at lines h8 to h10 (or h19 to h21).

As in the previous embodiment the ADD values at lines h9 and h20 may be chosen to have the same hamming weight(number of 1's), with appropriate number of NOP instructions added to block f. In addition the jump instructions at lines f4 and f5 may be placed at addresses with the same number of one's. Additional JMP instructions may also be inserted between the lines h1 and h8 with a destination in the same segment.

This embodiment thus uses unconditional jumps instead of conditional jumps and adds a random number of dummy operations to the code. The former property is a countermeasure against SPA and the latter makes DPA attacks more difficult. In particular this embodiment adds a random mask or noise to the program execution path since the jump to a random address within a segment causes program execution of a random number of operations before one of the branches is executed. Therefore each time one of the branches is executed, the number of operations performed by the processor varies randomly making DPA attacks more difficult.

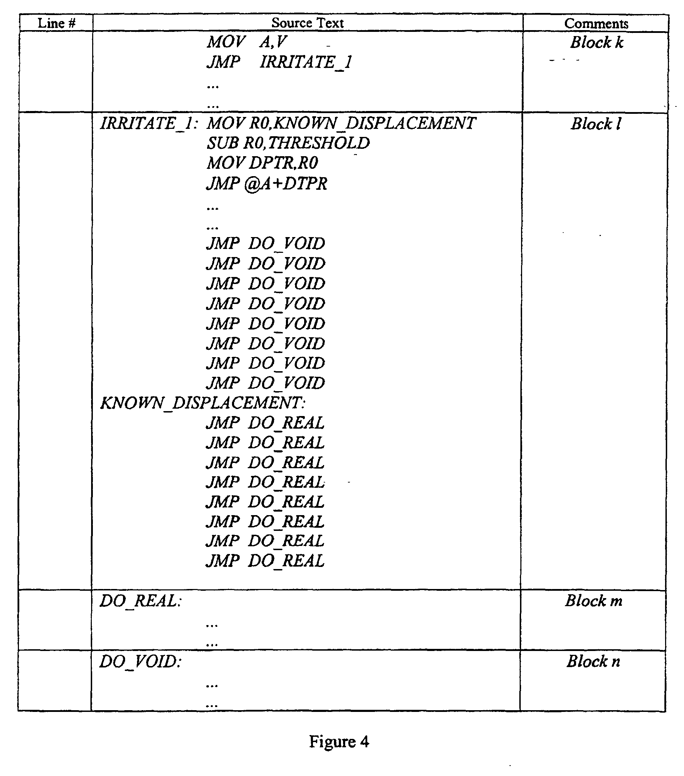

In the above embodiments, a subroutine is used to redirect program flow, however in figure 4, a simple series of jumps are used. The invention is thus not restricted to the embodiments shown.

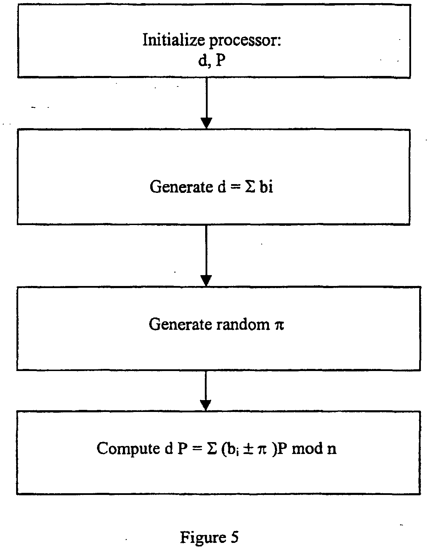

Referring to figure 5 an embodiment of a method, which is not covered by the present invention as claimed, is described. The method for masking a private key or secret used in a cryptographic operation is shown generally by numeral 200. The method comprises the steps of dividing the key into a plurality of parts and combining with each part a random value modulo n (where n is the number of points on the elliptic curve) to derive a new part such that the new parts are combined to be equivalent to the original private key value and utilizing each of the individual parts in the operation.

As seen in figure 5, the cryptographic processor is initialized with the public key or secret value d. In computing a public key Q = dP, the secret key d is normally combined with the point P to derive dP. The value d is divided into a number of parts, eg $d = b_{10} + b_{20}$.

In a first step the bi's are initialized $b_1 = b_{10}$ and $b_2 = b_{20}$ such that $d = b_{10} + b_{20}$. These values of $b_1$ and $b_2$ are stored instead of d. Alternatively the d value may also be stored if so desired, however in the case of a smart card where memory is limited this may not be desirable.

At a next step, a random number π is generated and the values b1 and and b2 are updated as follows:

$$b_1 = b_1 + \pi \bmod n$$

$$b2 = b_2 - \pi \bmod n$$

The updated values of $b_1$ and $b_2$ are stored. Computation is then performed on the point P using the components $b_1$ and $b_2$ as follows:

$$dP \bmod n = b_1 P + b_2 P \bmod n$$

Thus assuming the value π is randomly generated for each session then an attacker is unlikely to observe a predictable power signature.

In a typical application of the present invention a signature component s has the form:-

$$s = ae + k \pmod{n}$$

where:

P is a point on the curve which is a predefined parameter of the system;
k is a random integer selected as a short term *private* or session key;
R = kP is the corresponding short term *public* key;
a is the long term private key of the sender;
Q = aP is the senders corresponding public key;
e is a secure hash, such as the SHA-1 hash function, of a message m and the short term public key R; and
n is the order of the curve.

The sender sends to the recipient a message including m, s, and R and the signature is verified by computing the value $R' = (sP-eQ)$ which should correspond to R. If the computed values correspond then the signature is verified. Both the secret keys in the above example may be masked.

## Claims

1. A method of masking a conditional jump operation (f) in a cryptographic processor, programmed to execute a sequence of instructions, the method being **characterized in that** the execution branch is determined by evaluating a distinguishing value (V) as being one of two distinct values (Vmax, Vmin), the method further comprising the steps of:

(a) determining a location of a conditional jump in a program; and

(b) inserting processor instructions (f) at said location to direct program execution to one of two branches (i, j), and to derive a target address (g) from said distinguishing value (V) and a base address constituted by a random number (MASKED_RANDOM), wherein for each evaluation of said distinguishing value (V) a different number of instructions are executed for each conditional jump.

**2.** A method as defined in claim 1, said distinguishing value (V) being combined with said random number (MASKED_RANDOM), thereby adding a random number of instructions on every conditional evaluation.

**3.** A method as defined in claim 1, said inserted instructions including calls to respective subroutines (h), said subroutines (h) including instructions for changing the return address of the subroutines to said one of two branches (i, j).

**4.** A method as defined in claim 1, wherein said target address is comprised of said distinguishing value V and said random number (MASKED_RANDOM).

**5.** A method as defined in claim 4, wherein said target address is computed using an extended addressing mode of said processor.

**6.** A method of masking a conditional jump operation (a) in a cryptographic processor programmed to execute a sequence of instructions, the method being **characterized in that** the execution branch is determined by comparing a distinguishing value (V) to a reference value (THRESHOLD), the method comprising the steps of

(a) associating each of the branches (d, e) with a respective set of addresses (56, 58);
(b) computing a target address (b) from the distinguishing value (V) and said reference value (THRESHOLD), said target address being located in one of said sets of addresses (56, 58); and
(c) following the instruction at the target address, said instruction (JMP L1, JMP L2) directing program execution to the branch (d, e) associated with said one of said sets of addresses (56, 58).

**7.** A method according to claim 6, wherein each set of addresses (56, 58) contains a plurality of addresses.

**8.** A method according to claim 6, said instructions at each said target address within a set comprising identical instructions each directing execution to said branch (d,e) associated with the set.

**9.** A method according to claim 6, wherein said target address is determined by means of an extended addressing mode of said processor.

**Patentansprüche**

**1.** Verfahren zum Maskieren eines bedingten Sprungvorgangs (f) in einem Verschlüsselungsprozessor, der zum Ausführen einer Folge von Anweisungen programmiert ist, wobei das Verfahren **dadurch gekennzeichnet ist, dass** der Verzweigungspunkt der Ausführung durch Beurteilen eines Unterscheidungswertes (V) als einer von zwei getrennten Werten (Vmax, Vmin) ermittelt wird, wobei das Verfahren ferner die folgenden Schritte umfasst:

(a) Ermitteln eines Ortes eines bedingten Sprungs in einem Programm; und
(b) Einfügen von Prozessoranweisungen (f) an dem genannten Ort, um die Programmausführung zu einem von zwei Verzweigungspunkten (j,j) zu leiten und um eine Zieladresse (g) von dem genannten Unterscheidungswert (V) und eine Basisadresse abzuleiten, die von einer Zufallszahl (MASKED_RANDOM) gebildet wird, wobei für jede Beurteilung des genannten Unterscheidungswertes (V) eine andere Zahl von Anweisungen für jeden bedingten Sprung ausgeführt wird.

**2.** Verfahren nach Anspruch 1, bei dem der genannte Unterscheidungswert (V) mit der genannten Zufallszahl (MASKED_RANDOM) kombiniert wird, so dass eine Zufallszahl von Anweisungen bei jeder bedingten Beurteilung hinzugefügt wird.

**3.** Verfahren nach Anspruch 1, bei dem die genannten eingefügten Anweisungen Aufrufe an jeweilige Subroutinen (h) beinhalten, wobei die genannten Subroutinen (h) Anweisungen zum Ändern der Rückgabeadresse der Subroutinen zu dem genannten einen von zwei Verzweigungspunkten (i, j) beinhalten.

**4.** Verfahren nach Anspruch 1, bei dem die genannte Zieladresse aus dem genannten Unterscheidungswert V und der genannten Zufallszahl (MASKED_RANDOM) besteht.

**5.** Verfahren nach Anspruch 4, bei dem die genannte Zieladresse mit Hilfe eines erweiterten Adressiermodus des genannten Prozessors errechnet wird.

**6.** Verfahren zum Maskieren eines bedingten Sprungvorgangs (a) in einem Verschlüsselungsprozessor, der zum Ausführen einer Folge von Anweisungen programmiert ist, wobei das Verfahren **dadurch gekennzeichnet ist, dass** die Ausführungsverzweigung durch Vergleichen eines Unterscheidungswertes (V) mit einem Referenzwert (THRESHOLD) ermittelt wird, wobei das Verfahren die folgenden Schritte umfasst:

> (a) Assoziieren jedes der Verzweigungspunkte (d, e) mit einem jeweiligen Satz von Adressen (56, 58);
> (b) Errechnen einer Zieladresse (b) von dem Unterscheidungswert (V) und dem genannten Referenzwert (THRESHOLD), wobei sich die genannte Zieladresse in einer aus den genannten Sätzen von Adressen (56, 58) befindet; und
> (c) Befolgen der Anweisung an der Zieladresse, wobei die genannte Anweisung (JMP L1, JMP L2) die Programmausführung zu dem Verzweigungspunkt (d, e) leitet, der mit der genannten einen aus den genannten Sätzen von Adressen (56, 58) assoziiert ist.

**7.** Verfahren nach Anspruch 6, wobei jeder Satz von Adressen (56, 58) eine Mehrzahl von Adressen beinhaltet.

**8.** Verfahren nach Anspruch 6, wobei die genannten Anweisungen an jeder genannten Zieladresse in einem Satz identische Anweisungen umfassen, die jeweils die Ausführung zu dem genannten mit dem Satz assoziierten Verzweigungspunkt (d, e) leiten.

**9.** Verfahren nach Anspruch 6, bei dem die genannte Zieladresse mit Hilfe eines erweiterten Adressiermodus des genannten Prozessors ermittelt wird.

## Revendications

**1.** Procédé de masquage d'une opération de saut conditionnelle (f) dans un processeur cryptographique, programmée pour exécuter une séquence d'instructions, le procédé étant **caractérisé en ce que** la branche d'exécution est déterminée en évaluant une valeur de différenciation (V) comme étant l'une de deux valeurs distinctes (Vmax, Vmin), le procédé comprenant en outre les étapes consistant à :

> (a) déterminer un emplacement d'un saut conditionnel dans un programme ; et
> (b) insérer des instructions de processeur (f) audit emplacement afin de diriger l'exécution du programme vers l'une de deux branches (i, j) et de dériver une adresse cible (g) à partir de ladite valeur de différenciation (V) et une adresse de base constituée par un nombre aléatoire (ALEATOIRE\_ MASQUÉ), où pour chaque évaluation de ladite valeur de différentiation (V) un nombre différent d'instructions sont exécutées pour chaque saut conventionnel.

**2.** Procédé selon la revendication 1, ladite valeur de différenciation (V) étant combinée audit nombre aléatoire (ALEATOIRE\_ MASQUÉ), ajoutant ainsi un nombre aléatoire d'instructions à chaque évaluation conditionnelle.

**3.** Procédé selon la revendication 1, lesdites instructions insérées comportant des appels de sous-programmes respectifs (h), lesdits sous-programmes (h) comportant des instructions pour changer l'adresse de retour des sous-programmes vers ladite une des deux branches (i,j).

**4.** Procédé selon la revendication 1, dans lequel ladite adresse cible est composée de ladite valeur de différenciation V et dudit nombre aléatoire (ALEATOIRE \_MASQUÉ).

**5.** Procédé selon la revendication 4, dans lequel ladite adresse cible est calculée en utilisant un mode d'adressage étendu dudit processeur.

**6.** Procédé de masquage d'une opération de saut conditionnelle (a) dans un processeur cryptographique programmé pour exécuter une séquence d'instructions, le procédé étant **caractérisé en ce que** la branche d'exécution est déterminée en comparant une valeur de différenciation (V) à une valeur de référence (SEUIL), le procédé comprenant les étapes consistant à :

> (a) associer chacune des branches (d, e) à un ensemble respectif d'adresses (56, 58);
> (b) calculer une adresse cible (b) à partir de la valeur de différenciation (V) et de ladite valeur de référence (SEUIL), ladite adresse cible étant située dans l'un desdits ensembles d'adresses (56, 58) ; et
> (c) suivre l'instruction à l'adresse cible, ladite instruction (JMP L1, JMP L2) dirigeant l'exécution du programme vers la branche (d, e) associée audit un desdits ensembles d'adresses (56, 58).

**7.** Procédé selon la revendication 6, dans lequel chaque ensemble d'adresses (56, 58) contient une pluralité d'adresses.

**8.** Procédé selon la revendication 6, lesdites instructions à chaque dite adresse cible dans un ensemble comprenant des instructions identiques dirigeant chacune l'exécution vers ladite branche (d, e) associée à l'ensemble.

**9.** Procédé selon la revendication 6, dans lequel ladite adresse cible est déterminée au moyen d'un mode d'adressage étendu dudit processeur.

| LINE# | SOURCE TEXT | |
|-------|-------------|---|
| 1 | TH = random number between VMIN and VMAX | |
| 2 | FOR V from VMIN to VMAX do | |
| 3 | IF V < TH THEN | |
| 4 | DO statements1 | *{branch1}* |
| 5 | ELSE | |
| 6 | DO statements 2 | *{branch2}* |
| 7 | OF | |

<u>10</u>

Figure 1
(prior art)

| Line # | Source Text | Comment |
|--------|-------------|---------|
| A1 | MOV A,V | Block a |
| A2 | CALL IRRITATE_1 | |
| A3 | JMP DO_REAL | |
| A4 | JMP DO_VOID | |
| | ... | |
| | ... | |
| B1 | IRRITATE_1: MOV R0,KNOWN_DISPLACEMENT | Block b |
| B2 | SUB R0,THRESHOLD | |
| b3 | MOV DPTR,R0 | |
| b4 | JMP @A+DTPR | |
| | ... | |
| | ... | |
| c1 | JMP L1 | Block c |
| c2 | JMP L1 | |
| c3 | JMP L1 | |
| c4 | JMP L1 | |
| c5 | JMP L1 | 56 |
| c6 | JMP L1 | |
| c7 | JMP L1 | |
| c8 | JMP L1 | |
| c9 | JMP L2 | |
| c10 | JMP L2 | |
| c11 | JMP L2 | |
| c12 | JMP L2 | 58 |
| c13 | JMP L2 | |
| c14 | JMP L2 | |
| c15 | JMP L2 | |
| c16 | JMP L2 | |
| c17 | L1: POP A | |
| c18 | ADD #0 | |
| c19 | PUSH A | |
| c20 | RET | |
| c21 | L2: POP A | |
| c22 | ADD #1 | |
| c23 | PUSH A | |
| c24 | RET | |
| d1 | DO_REAL: Statements1 | Block d |
| d2 | ... | |
| | ... | |
| e1 | DO_VOID: Statements2 | Block e |
| e2 | ... | |
| | ... | |

50                                    Figure 2

| Line # | Source Text | Comments |
|---|---|---|
| f1 | MOV   A,V | Block f |
| f2 | MOV   DPTR,MASKED_RANDOM | |
| f3 | CALL   IRRITATE_2 | |
| f4 | JMP   DO_REAL | |
| f5 | JMP   DO_VOID | |
| | ... | |
| | ... | |
| g1 | IRRITATE_2:  JMP   @A+DPTR | Block g |
| g2 | ... | |
| | ... | |
| h1 | op1 | Block h |
| h2 | op2 | |
| h3 | op3 | |
| h4 | op4 | |
| h5 | op5 | |
| h6 | op6          } 106 | |
| h7 | op7 | |
| h8 | POP  A | |
| h9 | ADD #0 | |
| h10 | PUSH A | |
| h11 | RET | |
| h12 | Op1 | |
| h13 | Op2 | |
| h14 | op3 | |
| h15 | op4 | |
| h16 | op5 | |
| h17 | op6          } 108 | |
| h18 | op7 | |
| h19 | POP  A | |
| h20 | ADD #1 | |
| h21 | PUSH A | |
| h22 | RET | |
| i1 | DO_REAL:   Statements1 | Block i |
| i2 | ... | |
| | ... | |
| j1 | DO_VOID:   Statements2 | Block j |
| j2 | ... | |
| | ... | |

102

100          Figure 3

| Line # | Source Text | Comments |
|---|---|---|
| | *MOV   A,V* <br> *JMP    IRRITATE_1* <br> ... <br> ... | *Block k* |
| | *IRRITATE_1:  MOV R0,KNOWN_DISPLACEMENT* <br> *SUB R0,THRESHOLD* <br> *MOV DPTR,R0* <br> *JMP @A+DTPR* <br><br> ... <br><br> ... <br> *JMP  DO_VOID* <br> *JMP  DO_VOID* <br> *JMP  DO_VOID* <br> *JMP  DO_VOID* <br> *JMP  DO_VOID* <br> *JMP  DO_VOID* <br> *JMP  DO_VOID* <br> *JMP  DO_VOID* <br> *KNOWN_DISPLACEMENT:* <br> *JMP  DO_REAL* <br> *JMP  DO_REAL* <br> *JMP  DO_REAL* <br> *JMP  DO_REAL* <br> *JMP  DO_REAL* <br> *JMP  DO_REAL* <br> *JMP  DO_REAL* <br> *JMP  DO_REAL* | *Block l* |
| | *DO_REAL:* <br> ... <br> ... | *Block m* |
| | *DO_VOID:* <br> ... <br> ... | *Block n* |

Figure 4

Initialize processor:
d, P

Generate $d = \Sigma\, bi$

Generate random $\pi$

Compute $d\,P = \Sigma\,(b_i \pm \pi\,)P \bmod n$

Figure 5